# EUROPEAN PATENT SPECIFICATION

(11) **EP 1 287 072 B1**
(45) Date of publication and mention of the grant of the patent: **14.07.2004**
(21) Application number: 01909284.0
(22) Date of filing: 16.02.2001
(51) Int. Cl.: C08L 69/00, C08K 5/00

(54) **CARBONATE POLYMER COMPOSITIONS COMPRISING LOW VOLATILE UV ABSORBING COMPOUNDS**
POLYCARBONATZUSAMMENSETZUNGEN ENTHALTEND SCHWERFLÜCHTIGE UV-ABSORBIERENDE VERBINDUNGEN
COMPOSITIONS BASE DE POLYMERE DE CARBONATE CONTENANT DES COMPOSES ABSORBANCE UV PEU VOLATILS

(30) Priority: 19.05.2000 US 575100
(43) Date of publication of application: 05.03.2003
(73) Proprietor: DOW GLOBAL TECHNOLOGIES INC., Midland, Michigan 48674 (US)
(72) Inventor: VAN NUFFEL, Claude, T., E., B-9041 Oostakker (BE)
(74) Representative: Casalonga, Axel
(86) International application number: PCT/US2001/005113
(87) International publication number: WO 2001/090244

(56) References cited:
- WO-A-00/73386
- WO-A-01/16224
- WO-A-99/03915
- DE-A- 19 924 984
- GB-A- 2 322 861

## Description

This invention relates to a carbonate polymer composition which contains a low volatile UV absorber, a phosphite type stabilizer, a hindered phenol type stabilizer and a lactone type stabilizer.

Polycarbonate resins offer an excellent balance of properties with respect to transparency, toughness, dimensional stability and heat resistance. These properties make polycarbonate an ideal choice for the preparation of many types of molded, shaped or otherwise fabricated articles, especially including sheets or other structures and parts to be used in glazing and other outdoor applications. However, polycarbonates, like most organic polymers, degrade when they are exposed to ultraviolet (UV) light. As the polycarbonate absorbs significant amounts of high energy light and begins to degrade, it is known to become yellow and hazy and lose its toughness. Since polycarbonates derive much of their value and utility from their excellent optical properties, that is, low color and high clarity, protection against UV becomes vital.

The use of various types of UV absorbers in the stabilization of polymers is well known. See for example US-A-3,215,725 (bis cyano-diphenyl-acrylic acid esters); US-A-4,812,498 (bis benzotriazoles); US-A-5,288,778; GB 2,290,745 and EP-A-825,226 (triazine compounds); US-A-5,821,380 (multifunctional 2-cyanoacrylic acid esters); EP-A-68,327 (cyclic imino esters also referred to benzoxazinones) and EP-A-110, 221 (benzophenones and benzotriazoles). These stabilizers function by absorbing incident UV radiation and dispersing the absorbed energy in a nondestructive manner. Their overall effectiveness in preventing UV degradation of the polymer depends on numerous factors, including absorptivity, compatibility, stability and distribution within the polymer. Their UV absorption effectiveness is a function of their concentration in the polymer, especially near the surface. Concentration of the UV absorber near the surface of the polymer is very desirable to prevent penetration of UV light and is considered to be more efficient and economical than dispersion of the UV absorber throughout the bulk of the polymer.

It is critical, therefore, for effective UV stabilization of polymers to have effective concentrations of UV absorbers present near the surface after processing and during long term. Both chemical and physical losses of the UV absorber will affect the concentration of UV absorbers in polymers. Chemical losses result from the thermal, photo-oxidative and oxidative reactions that inactivate or consume the compounds themselves. Physical loss of the UV absorber involves the removal of material from the surface by evaporation or dissolution that is not offset by its replacement in the surface layer by diffusion from the bulk polymer

When UV absorbers are physically lost from polymers, this may lead to undesired effects, such as fuming and plate-out in sheet extrusion or juicing and mold sweat during injection molding. All of these phenomena will result in reduced UV absorber concentrations in the resin and reduced production rates due to frequent, necessary cleaning operations of the equipment. Improved retention of an UV absorber conversely provides more effective stabilization in the desired end use as well as better processability in terms of reduced fuming, plate-out, mold sweat, juicing, etc.

Various methods have been used to improve the UV-stability of polycarbonate (PC). Common approaches are to use UV absorbers as additives in the polycarbonate and to apply layers or other surface treatments to prepare structures where the UV absorbers can be concentrated in the surface or outer layers to prevent UV radiation from deeper penetration into and degradation of the main thickness of the PC sheet. A number of methods and techniques have been developed to concentrate UV absorbers near or at the surface of polymeric materials. These include surface impregnation (see for example US-A-3,309,220; US-A-3,043,709; US-A-4,861,664 and US-A-4,937,026); coating a plastic article with solutions containing thermoplastic resins and UV absorbers (see for example US-A-4,668,588 and US-A-4,353,965); thermal bonding of film layers (see for example JP 07-9,560); and coextrusion (see for example EP-A-110,221; EP-A-247,480; EP-A-320,632; EP-A-338,355 and EP-A-825,226; GB 2,290,745 and US-A-4,264,680 and US-A-5,108,835). In these and other coextrusion references, there is an emphasis on the use of higher molecular weight and lower volatility compounds if used in higher concentrations in coextruded surface layers.

It is also generally known to incorporate additional stabilizers of various other types into polycarbonate compositions to prevent discoloration of the polymer and the final article during processing and end-use. US-A-4,812,498; US-A-5,288,778 and US-A-5,821,380 and GB 2,290,745 all teach the use of numerous co-stabilizers. The use of phosphite stabilizers in combination with a triazine-type UV absorber has been described in EP-A-825,226. JP 10-044,356; 10-044,357 and 10-044,358 teach the use of a combination of triazine-type UV absorber, phosphite and hindered phenolic stabilizers added or applied to polycarbonate resins. JP 04-103,626; 04-159,354 and 10-138,435 teach the use of a combination of benzotriazole-type UV absorber, phosphite and hindered phenolic stabilizers added or applied to polycarbonate resins. GB-2,322,861 teaches the stabilization of polycarbonates with benzofuran-2-one lactone-type additives optionally employing a wide range of additional co-stabilizers of various different types.

However, in the case of polycarbonate formulations and especially co-extrudable compositions, which contain high levels of UV absorbers, it is always desirable to have improved combinations of physical, processing and appearance properties. It is especially desirable to have such improved resins, improved stabilized articles and improved processes where the stabilizers volatilize less and are better maintained in the compositions and articles during and after processing.

It is thus the objective of the present invention to provide improved carbonate polymer compositions and improved molded, shaped or otherwise fabricated articles having appropriate UV protection (for example, appearance stability) especially for outdoor applications. It is also an objective to provide an improved process for the preparation of these improved molded, shaped or otherwise fabricated articles.

In one embodiment, this invention relates to improved carbonate polymer compositions comprising one or more UV absorbing compounds having a molecular weight of at least 400 g/mol selected from a hydroxybenzotriazole derivative, a hydroxyphenyltriazine derivative or mixtures thereof; a phenyl phosphite type stabilizer; a hindered phenol type stabilizer; and a lactone type stabilizer.

In another embodiment, the present invention is an improved process for preparing a carbonate polymer composition as described hereinabove.

In a further embodiment, the present invention involves a process of extruding or molding (for example, thermoforming, blow molding, injection molding, etc.) an improved carbonate polymer composition prepared as described hereinabove and extruded or molded into an improved extruded or molded article.

In yet a further embodiment, the invention involves extruded or molded articles of an improved carbonate polymer composition as described hereinabove.

It has been found that the improved carbonate polymer compositions and the improved articles which can be prepared have excellent resistance against UV radiation and provide improved combinations of base color and color stability. It has also been found that the UV absorbers added according to the present invention provide reduced levels of color or yellowing in the final carbonate polymer compositions/articles. This can be particularly noticeable in the resin granules when high levels of UV absorbers are incorporated in a resin to be used as the coextrudable surface layer or when there are multiple thickness of extruded sheet or other article that is stacked or lined up together.

It has also been found that the invention provides improved processes for preparing such articles with reduced levels of plate-out, fuming, mold sweat and/or juicing.

All types of carbonate polymers are generally suitable for use in the compositions, articles and processes of the present invention. Many types of suitable carbonate polymers are well known and commercially available. Suitable types of carbonate polymers include linear and branched carbonate polymers as well as blends thereof. As mentioned above, the present invention is directed both to formulations based on carbonate polymers which can be directly used to prepare molded, shaped or otherwise fabricated articles ("bulk stabilized resins") and to formulations based on carbonate polymers which can be used as a surface or external coating or layer ("capstock resins") to protect substrate articles or core layers which can be a carbonate polymer of the same or different type or some other polymer resin.

The carbonate polymers of the present invention can be prepared using any of the known polycarbonate polymerization processes, including the interfacial process, solution process or the melt or solid state advancement versions of the transesterification carbonate polymer polymerization process.

In general, these carbonate polymers are prepared from one or more multihydric components by reacting the multihydric compound, such as a diphenol, with a carbonate precursor such as phosgene, a haloformate or a carbonate ester such as diphenyl or dimethyl carbonate. Aromatic carbonate polymers are preferred and aromatic diphenols are preferred for use as at least part of the multihydric compound with preferred diphenols including but not limited to 2,2-bis (4-hydroxyphenyl)-propane (bisphenol A), phenol, 4,4'-(9-H-fluorene-9-ylidene)bis (bishydroxyphenylfluorene), 4,4'-thiodiphenol (TDP), 1,1-bis (4--hydroxyphenyl)-1-phenyl ethane (bisphenol AP); phenolphthalein; bis (4-hydroxyphenyl) diphenyl methane; tetrabromobisphenol A (TBBA); and tetrachlorobisphenol A (TCBA). These carbonate polymers also include aromatic carbonate polymers prepared from two or more different dihydric phenols or a combination of a dihydric phenol and a glycol or a hydroxy- or acid-terminated polyester or a dicarboxylic acid in the event a carbonate copolymer or heteropolymer is desired.

The linear and branched carbonate polymers suitable for use in the present invention also include carbonate polymers prepared from two or more different multihydroxy compounds, preferably dihydroxy compounds, and preferably phenols, or a combination of a multihydroxy compound, such as a diphenol, and a glycol or a hydroxy- or acid-terminated polyester or a dicarboxylic acid in the event a carbonate copolymer or heteropolymer is desired. It is also possible to employ multifunctional carboxylic acids, especially aromatic carboxylic acids, and prepare poly(ester-carbonate) resins such as the known aromatic poly(estercarbonates). The known silicon-containing carbonate monomers can also be used to prepare silicon-containing carbonate polymers that are suitable for use in the present invention.

Suitable types and amounts of chain terminators (typically monophenolic compounds) and, in the case of branched polycarbonates, branching agents (typically phenols having three or more hydroxy groups) can be employed to obtain the desired molecular weight and branching degrees in the higher molecular weight branched component.

Suitable branching agents are generally one or more of the following: phloroglucin; phloroglucid; 2,6-dimethyl-2,4,6-tri(4-hydroxyphenyl)heptene-3; 4,6-dimethyl-2,4,6-tri(4-hydroxyphenyl)heptene-2; 4,6-dimethyl-2,4,6-tri(4-hydroxyphenyl)pentene-2; 4,6-dimethyl-2,4,6-tri(4-hydroxyphenyl)pentane; 1,3,5-tri(4-hydroxyphenyl)benzene; 1,3,5-tri(2-hydroxyphenyl)benzol; 1,1,1-tri(4-hydroxyphenyl)ethane; 2,6-bis(2-hydroxy-5-methylbenzyl)-4-methylphenol; tetra(4-hydroxy-phenyl)methane; trisphenol; bis(2,4-dihydroxyphenyl)ketone; 1,4-bis(4,4-dihydroxytriphenylmethyl)benzene; α,α',α"-tri(4-hydroxyphenyl)-1,3,5-tri-isopropylbenzene; 3,3-bis(4-hydroxyaryl)oxyindole; isatinbisphenol; 5-chloroisatin; 5,7-dichloroisatin; 5-bromoisatin; trimellitic acid; pyromellitic acid; benzophenonetetracarboxylic acid; and including for the appropriate compounds, the acid chlorides or other condensation reactive derivatives thereof. Specifically preferred branching agents include phloroglucin; phloroglucid; 1,1,1-tri(4-hydroxyphenyl)ethane; trimellitic acid; pyromellitic acid; benzophenonetetracarboxylic acid and acid chlorides thereof; 2,6-bis(2-hydroxy-5-methylbenzyl)-4-methylphenol and 1,3,5-tri(4-hydroxyphenyl)benzene.

It has been found that levels of branching agent in the branched carbonate polymer components for use in the present invention should be in the range of from 0.005 to 1.0 mole branching agent per mole of dihydroxy compound, preferably from 0.01 to 0.8, and more preferably from 0.1 to 0.6 mole branching agent per mole of dihydroxy compound.

In general, by whatever production technique it is prepared and whichever type or types it is, the carbonate polymer should have a molecular weight that provides the desired balance of processing features (melt flow rate, melt strength, and shear sensitivity) and physical properties (toughness, and surface properties) according to the known trade-offs between these. In general, the polycarbonate resin should have a weight average molecular weight of at least 18,000, preferably at least 20,000 and more preferably at least 21,000 and not greater than 42,000, preferably not greater than 41,000 and more preferably not greater than 40,000.

In general, branched carbonate polymers are commercially available and should have a weight average molecular weight of at least 22,000, preferably at least 25,000 and more preferably at least 27,000. In order to obtain branched polymer with minimized levels of gels and other beneficial effects of the branched component, it has been found that the weight average molecular weight of a branched polymer should not be higher than 39,000, preferably not higher than 38,000, most preferably not higher than 37,000. In this range it has been found that the branched carbonate polymer should have a melt flow rate (MFR) determined under conditions of 300°C and 1.2 kilograms mass (300°C/1.2 kg) of at least 2 grams per 10 minutes (g/10 min.), preferably at least 2.5 g/10 min. and most preferably at least 3.0 g/10 min. It has been found that the branched carbonate polymer should have a melt flow rate preferably no more than 30 g/10 min., preferably no more than 15 g/10 min. and most preferably no more than 12 g/10 min.

In general, it can be indirectly determined whether there is a sufficient degree of branching in the branched carbonate polymer by measuring the change in shear sensitivity due to the incorporation of the branched carbonate polymer in a carbonate polymer blend composition. These measurements of shear sensitivity can be done by standard techniques with dynamic mechanical spectroscopy (DMS) or by capillary rheometry.

Suitable linear carbonate polymers are known in the literature and commercially available. For purposes of obtaining desired toughness and crack resistance, it has been found that the linear carbonate polymer component should have a weight average molecular weight of at least 18,000, preferably at least 20,000, and most preferably at least 21,000. In order to keep the desired level of polymer melt flow and processability it has been found that the linear carbonate polymer component should have a weight average molecular weight of no more than 42,000, preferably no more than 41,000, most preferably no more than 40,000. In this range it has been found that the linear carbonate polymer should have a melt flow rate of at least 2 g/10 min., preferably at least 2.5 g/10 min. and most preferably at least 3.0 g/10 min. It has been found that the linear carbonate polymer should have a melt flow rate of no more than 80 g/10 min., preferably no more than 40 g/10 min. and most preferably no more than 35 g/10 min.

For the present invention, blend compositions consisting of a branched carbonate polymer and a linear carbonate polymer component can be used. It is understood that the carbonate polymers suitable for use according to the present invention may be a single component carbonate polymer directly obtained from a polymerization process. On the other hand, the carbonate polymer can also be based on a combination of two components of the same type of differing molecular weights and melt flow rates that are blended to obtain the desired intermediate melt flow rate product.

Listed hereinbelow are examples of some preferred carbonate polymers. CALIBRE™ brand polycarbonate resins are commercially available from The Dow Chemical Company. The molecular weights of the components are determined by gel permeation chromatography (GPC). The melt flow rate values are measured according to ASTM D-1238 (300°C/1.2 kg) and are reported in g/10 min. Unless otherwise indicated, the references to "molecular weight" herein refer to weight average molecular weights (M_{w}) determined on the carbonate polymers using gel permeation chromatography with a bisphenol A polycarbonate standard. It should be noted that various references refer to "viscosity average" molecular weight (Mᵥ), which is not the same as "weight average" molecular weight but can be correlated or converted to M_{w} values. Molecular weight distribution (MWD) is the ratio of weight average molecular weight to number average molecular weight (M_{w}/Mₙ).

### Preferred Carbonate Polymers

| Carbonate Polymer | MFR | M_{w} | Mₙ | MWD | Type |
|---|---|---|---|---|---|
| CALIBRE 600-3 | 3 | 36500 | 13700 | 2.66 | Branched |
| CALIBRE 200-3 | 3 | 38700 | 14200 | 2.72 | Linear |
| CALIBRE 200-15 | 15 | 26400 | 10500 | 2.52 | Linear |

The carbonate polymer compositions, articles and processes according to the present invention are based on the use of one or more UV absorbers selected from a hydroxybenzotriazole derivative, a hydroxyphenyltriazine derivative, or mixtures thereof, wherein all UV absorbing compounds of the present invention have a molecular weight equal to or greater than 400 g/mol.

The hydroxybenzotriazole derivatives suitable for use in the present invention are represented by the formula 1: 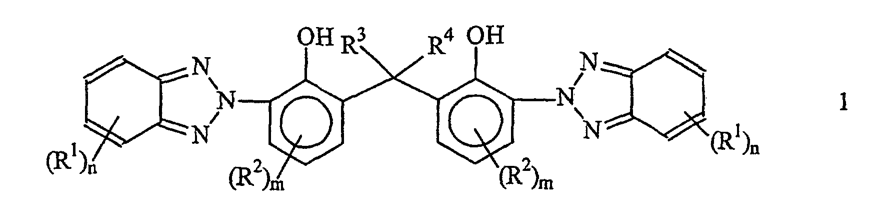 wherein R¹ and R², which may be the same or different, represent H, halogen, C₁-C₁₀ alkyl, C₅-C₁₀ cycloalkyl, C₇-C₁₃ aralkyl, C₆-C₁₄ aryl, OR⁵ or COOR⁵, wherein R⁵ represents H or C₁-C₄ alkyl; R³ and R⁴ may also be the same or different and represent H, C₁-C₄ alkyl, C₅ or C₆ cycloalkyl, benzyl or C₆-C₁₄ aryl; m represents 1, 2 or 3 and n represents 1, 2, 3, or 4.

R¹ preferably represents H, Cl or CH₃ and R² preferably represents H, C₁-C₁₀ alkyl, cyclohexyl, C₇-C₉ aralkyl, phenyl or naphthyl. R³ and R⁴ preferably represent H or C₁-C₄ alkyl; m preferably represents 1, and n also preferably represents 1.

Particularly preferred hydroxybenzotriazole derivatives (1) are those wherein R¹ represents H; R² represents H or C₁-C₉ alkyl; R³ represents H; R⁴ represents H; m represents 1 and n represents 1.

A most preferred example of a hydroxybenzotriazole derivative of this invention is 2,2'-methylene-bis-(6-{2H-benzotriazol-2-yl}-4-{1,1,3,3-tetramethyl-butyl}-phenol) represented by the following structure:

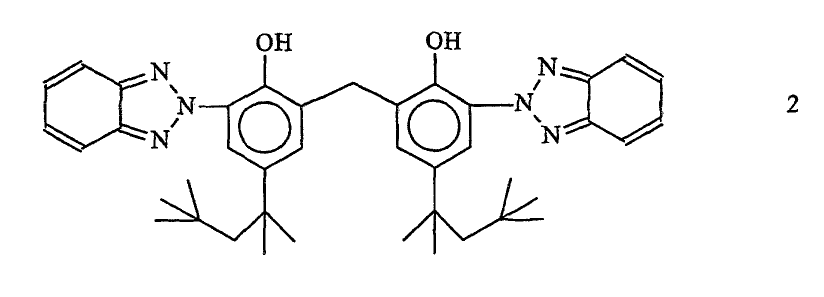

These higher molecular weight hydroxybenzotriazole derivatives are selected to provide optimized benefits and properties in the areas of UV stabilization performance, improved processability (due to reduced volatility, reduced plate-out, and reduced fuming) and performance and appearance of the final articles. In general, these compounds should have molecular weights equal to or greater than 400, preferably equal to or greater than 500, more preferably equal to or greater than 550 and most preferably equal to or greater than 600 g/mol. In general, at higher molecular weights there is diminishing solubility in polycarbonate and increasing costs and molecular weights of these compounds should not be greater than 2500, preferably not greater than 2000, more preferably not greater than 1800, and most preferably not greater than 1600 g/mol.

The hydroxyphenyltriazine derivatives suitable for use in the present invention are taught in US-A-5,288,778 and EP-A-825,226. These compounds are generally represented by the following formula: 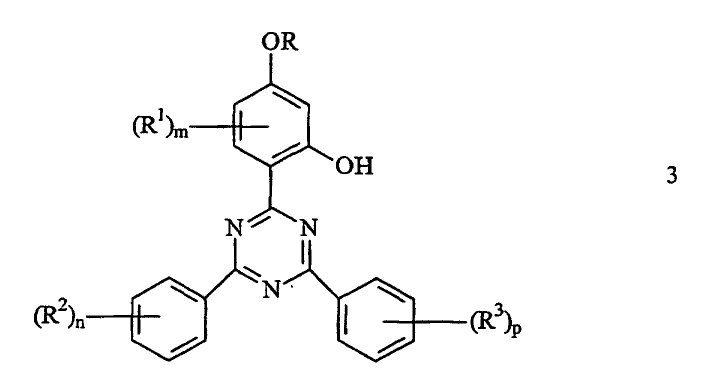 wherein R is hydrogen, C₁ to C₁₈ alkyl, C₂ to C₆ alkyl substituted by halogen or by C₁ to C₁₂ alkoxy, or is benzyl and R¹, R², and R³ which may be the same or different, represent H, halogen, C₁-C₁₀ alkyl, C₅-C₁₀ cycloalkyl, C₇-C₁₃ aralkyl, C₆-C₁₄ aryl, OR⁴ or COOR⁴, wherein R⁴ represents H or C₁-C₄ alkyl; and m represents 1, 2 or 3 and n and p which may be the same or different, represent 1, 2, 3, 4 or 5.

R¹ preferably represents hydrogen and R² and R³ which may be the same or different, preferably represent H, C₁-C₁₀ alkyl, cyclohexyl, C₇-C₉ aralkyl, phenyl or naphthyl and most preferably H or C₁-C₁₀ alkyl; m preferably represents 1, and n and p which may be the same or different, preferably represent 1 or 2.

A most preferred example of a hydroxyphenyltriazine derivative of this invention is 2-(4,6-diphenyl-1,3,5-triazin-2-yl)-5-hexyloxyphenol represented by the following structure:

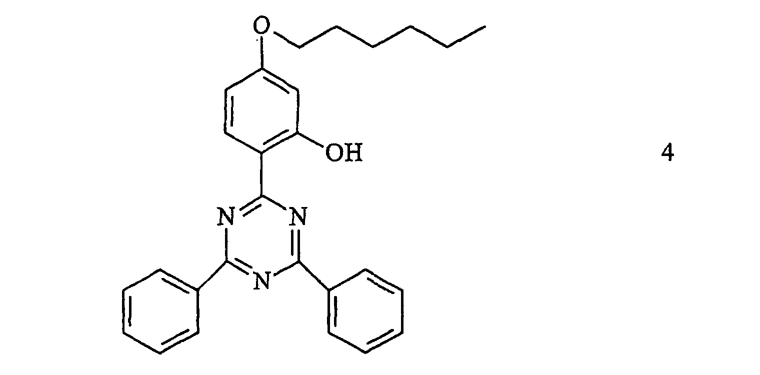

These higher molecular weight hydroxyphenyltriazine derivatives are selected to provide optimized benefits and properties in the areas of UV stabilization performance, improved processability (due to reduced volatility, reduced plate-out, and reduced fuming) and performance and appearance of the final articles. In general, these compounds should have molecular weights equal to or greater than 400 and most preferably equal to or greater than 425 g/mol. In general, at higher molecular weights there is diminishing solubility in polycarbonate and increasing costs and molecular weights of these compounds should not be greater than 2500, preferably not greater than 2000, more preferably not greater than 1800, and most preferably not greater than 1600 g/mol.

The amounts of the UV absorbers to be included in the carbonate polymer compositions according to the present invention will vary depending upon whether they are to be employed in "standard" levels throughout the total thickness or bulk of the carbonate polymer to be stabilized or in a concentrate, capstock or surface coating type of resin where relatively high concentrations are employed in order to completely block UV transmittance to the substrate article or layers in a relatively thin layer thickness. In general, to provide UV absorption protection to the carbonate polymers, these compounds can be used in "standard" levels of at least 0.05 weight percent based on weight of carbonate polymer into which the compound is being incorporated, preferably at least 0.10 weight percent, more preferably at least 0.15 weight percent and most preferably at least 0.20 weight percent based on weight of carbonate polymer. If preparing a concentrate resin, capstock resin or other type of surface coating these compounds can be used in levels of at least 1 weight percent, preferably at least 1.5 weight percent, more preferably at least 2 weight percent, even more preferably at least 2.5 weight percent and most preferably at least 3 weight percent based on weight of carbonate polymer. In general, at higher concentration levels there is diminishing UV protection benefit and levels of these compounds should not be greater than 15 weight percent, preferably not greater than 12 weight percent, more preferably not greater than 10 weight percent and most preferably not greater than 8 weight percent based on weight of carbonate polymer.

In addition, the compositions/articles/processes according to the present invention also employ an additional phenyl phosphite thermal stabilizer where there are at least two substitutions per phenyl group(s) and which can be a mono- or diphosphite. These compounds are generally known and are taught in JP 10-044,356, JP 10-044,357 and JP 10-044,358. These compounds are represented generally by the following structures:

For monophosphates, compounds represented generally by the following structure: 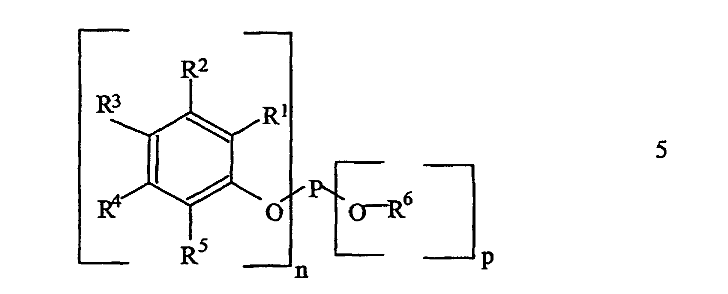 where the R substituents may be the same or different and can independently of one another be H, C₁ - C₁₅ alkyl, C₅-C₁₀ cycloalkyl, C₇-C₂₀ aralkyl, C₆-C₁₄ aryl, -OR₇ or -COOR₇ where R₇ is H, C₁ - C₁₅ alkyl, C₅-C₁₀ cycloalkyl, C₇-C₂₀ aralkyl, or C₆-C₁₄ aryl and provided that at least two of the 5 R groups per phenyl ring must be different than H; n is from 1 to 3, preferably 3; and p is 3 - n. or 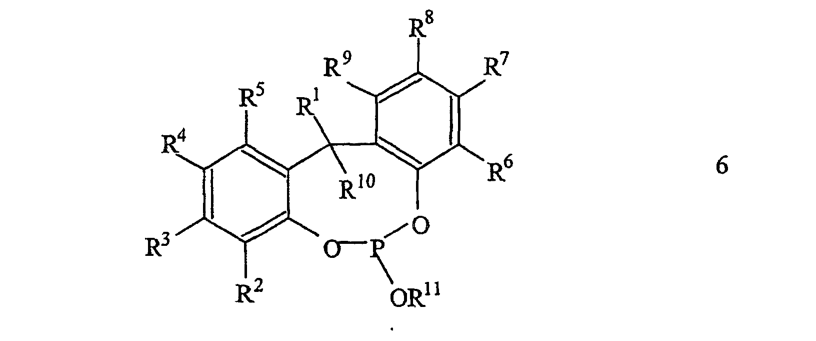 where the R substituents may be the same or different and can independently of one another be H, C₁ - C₁₅ alkyl, C₅-C₁₀ cycloalkyl, C₇-C₂₀ aralkyl, C₆-C₁₄ aryl, -OR¹² or -COOR¹² where R¹² is H, C₁ - C₁₅ alkyl, C₅-C₁₀ cycloalkyl, C₇-C₂₀ aralkyl, or C₆-C₁₄ aryl and provided that at least two of the 5 R groups per phenyl ring must be different than H.

For diphosphites compounds represented generally by the following structure: 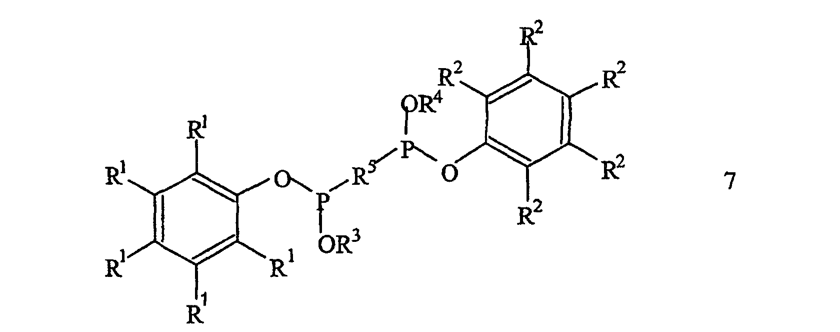 where the R¹, R², R³ and R⁴ substituents may be the same or different and can independently of one another be H, C₁ - C₁₅ alkyl, C₅-C₁₀ cycloalkyl, C₇-C₂₀ aralkyl, C₆-C₁₄ aryl, -OR⁶ or -COOR⁶ where R⁶ is H, C₁ - C₁₅ alkyl, C₅-C₁₀ cycloalkyl, C₇-C₂₀ aralkyl, or C₆-C₁₄ aryl and provided that at least two of the 5 R groups per phenyl ring must be different than H; R⁵ is divalent and may be C₁ - C₁₅ alkyl, C₅-C₁₀ cycloalkyl, C₇-C₂₀ aralkyl, C₆-C₁₄ aryl,
or 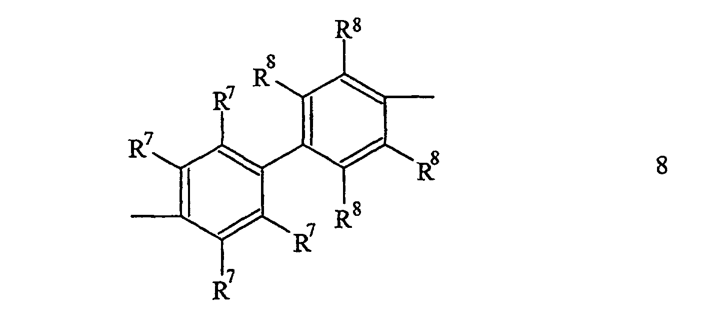 where the R⁷ and R⁸ substituents may be the same or different and can independently of one another be H, C₁ - C₁₅ alkyl, C₅-C₁₀ cycloalkyl, C₇-C₂₀ aralkyl, C₆-C₁₄ aryl, -OR⁹ or -COOR⁹ where R⁹ is H, C₁ - C₁₅ alkyl, C₅-C₁₀ cycloalkyl, C₇-C₂₀ aralkyl, or C₆-C₁₄ aryl and the R³ and R⁴ substituents may also be: 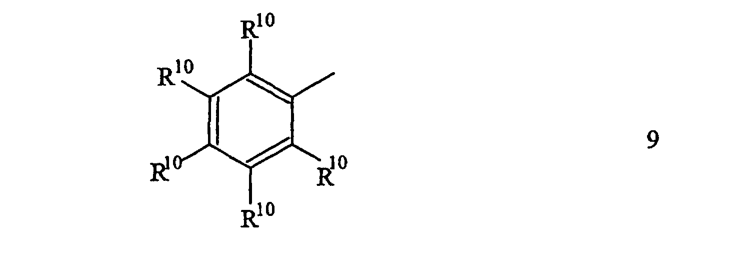 where the R¹⁰ substituents may be the same or different and can independently of one another be H, C₁ - C₁₅ alkyl, C₅-C₁₀ cycloalkyl, C₇-C₂₀ aralkyl, C₆-C₁₄ aryl, -OR¹¹ or - COOR¹¹ where R¹¹ is H, C₁ - C₁₅ alkyl, C₅-C₁₀ cycloalkyl, C₇-C₂₀ aralkyl, or C₆-C₁₄ aryl and provided that at least two of the 5 R groups per phenyl ring must be different than H; or diphosphite compounds represented generally by the following structure: 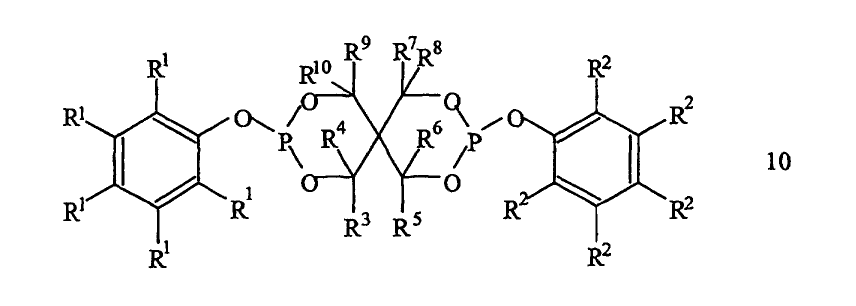 where the R¹ to R¹⁰ substituents may be the same or different and can independently of one another be H, C₁-C₁₅ alkyl, C₅-C₁₀ cycloalkyl, C₇-C₂₀ aralkyl, C₆-C₁₄ aryl, -OR¹¹ or -COOR¹¹ where R¹¹ is H, C₁ - C₁₅ alkyl, C₅-C₁₀ cycloalkyl, C₇-C₂₀ aralkyl, C₆-C₁₄ aryl, provided that at least two of the 5 R groups per phenyl ring must be different than H.

The selection of suitable and preferred phosphite compounds is based upon providing optimized combinations of their known secondary antioxidation properties (reaction with hydroperoxides preventing further degradation of the polycarbonate) along with surprising contributions to the UV stability, color reduction, color stability, plateout reduction and fuming reduction.

One of the preferred phosphite stabilizers is tris(2,4-di-tert-butylphenyl)phosphite represented by the following structure: 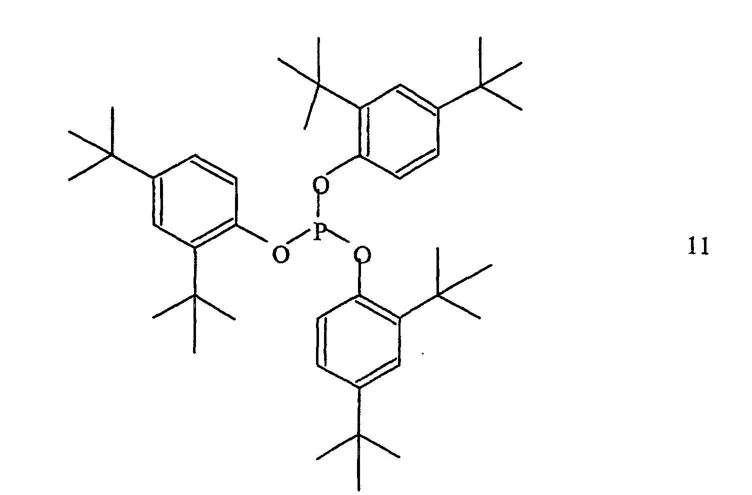 and is commercially available under the Tradename IRGAFOS™ 168 from Ciba Geigy.

Other preferred phenyl phosphite stabilizers are bis (2,4-di-tert-butyl-phenyl) pentaerythritoldiphosphite: 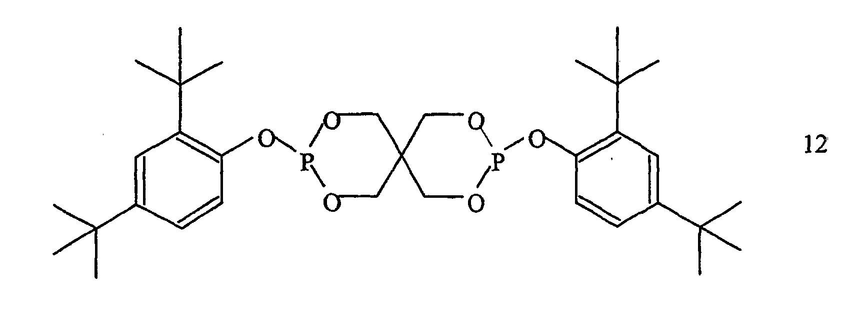 which is commercially available from Great Lakes Chemical as ALKANOX™ P-24; bis(2,6-di-tert-butyl-4-methylphenyl)pentaerythritol diphosphite: 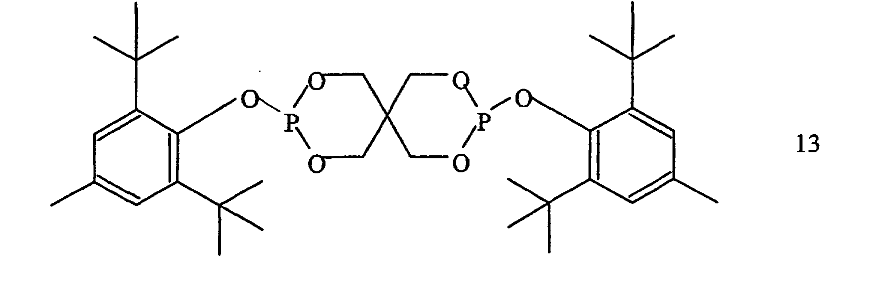 which is commercially available from Asahi Denka Kogyo K.K. as ADK STAB PEP-36;
bis (2,4-dicumylphenyl) pentaerythritol diphosphite: 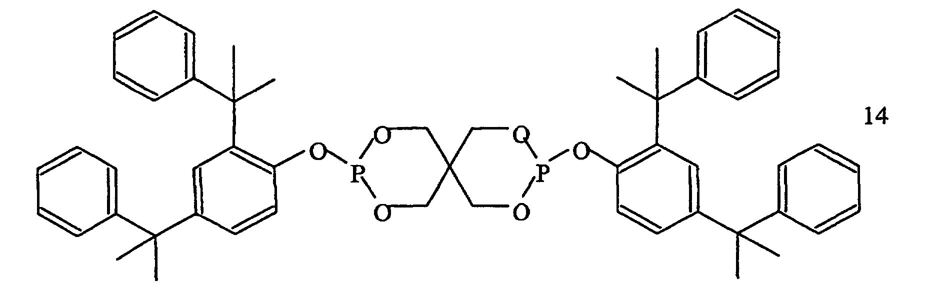 which is commercially available from Great Lakes Chemical as ALKANOX 28 and from Dover Chemical Corp. as DOVERPHOS™ S-9228;
tetrakis (2,4-di-tert-butyl-phenyl) 4,4'-biphenylene-diphosphonite: 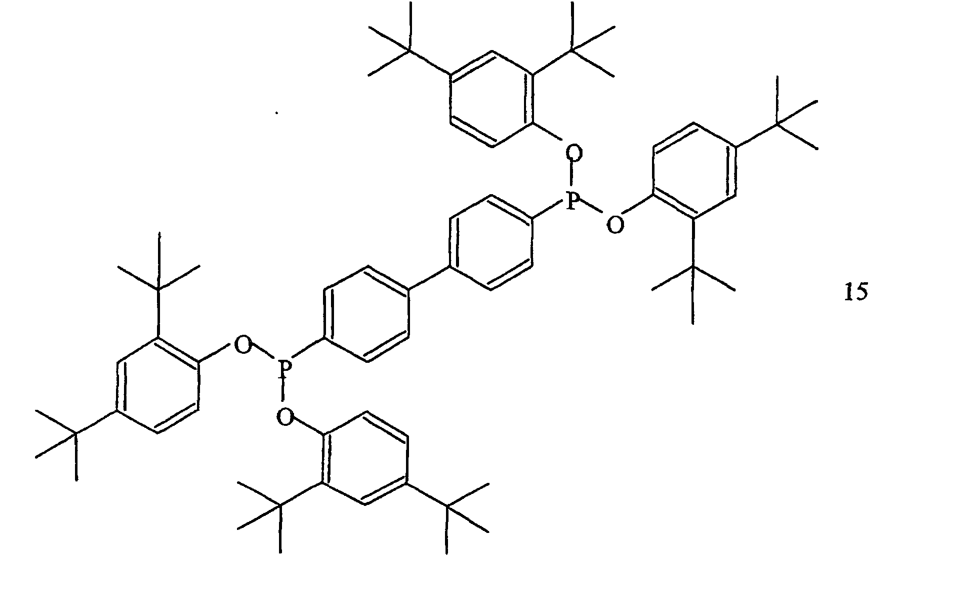 which is commercially available from Ciba Specialty Chemicals Inc. as IRGAFOS P-EPQ and from Great Lakes Chemical as ALKANOX 24-44; and
2,2'-methylenebis(4,6-di-tert-butyl-phenyl)octyl-phosphite: 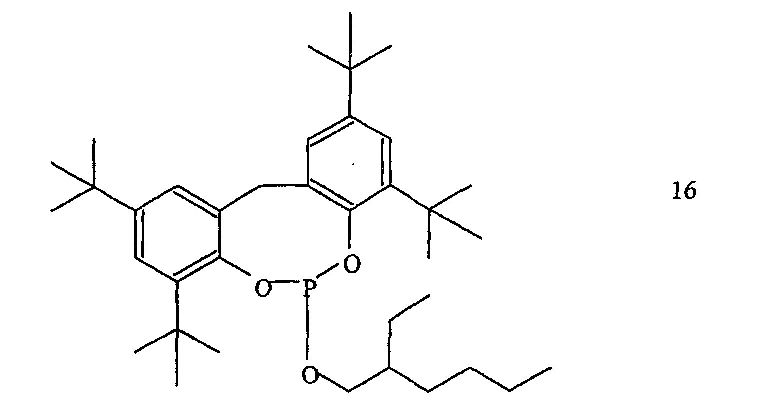 which is commercially available from Asahi Denka Kogyo K.K. as ADK STAB BP-10.

The amounts of the phosphite stabilizer to be included in the carbonate polymer compositions according to the present invention will vary depending upon the desired balance of the above mentioned combinations of properties and cost. In general, to provide noticeable stabilizing effects and benefits, the phosphite stabilizers should be used at levels of at least 20 parts per million (ppm) based on weight of carbonate polymer into which the compound is being incorporated, preferably at least 30 ppm and most preferably at least 50 ppm. In general, at higher concentration levels there is diminishing benefit and levels of these compounds should not be greater than 3000 ppm, preferably not greater than 2000 ppm, and most preferably not greater than 1500 ppm.

In addition to the phosphite stabilizer, it is also desirable to include hindered phenol and lactone type stabilizers.

The compositions according to the invention, therefore, also employ a hindered phenol-type stabilizer. These stabilizers and methods for their preparation are generally known and commercially available. These compounds generally contain at least one moiety represented by the following structure: 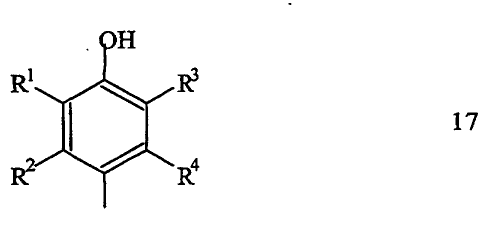 wherein R¹ through R⁴ are selected from and can independently of one another be H, C₁ -C₁₅ alkyl, C₅-C₁₀ cycloalkyl, C₇-C₂₀ aralkyl, C₆-C₁₄ aryl, and provided that at least R¹ and R³ must be different than H. It should be noted that the hindered phenol compounds can be mono-, di-, tri- and tetra-phenols and including combinations of two or more of these.

The selection of suitable and preferred hindered phenol-type stabilizers is based upon providing the known benefit of primary antioxidation (reaction with peroxides to reduce the autocatalytic degradation of PC) as well as the surprising contributions to the UV stability, reduced color, color stability, reduced plateout and reduced fuming that are provided in the in the final formulations.

A preferred hindered phenol is octadecyl 3,5-di-t-butyl-4-hydroxyhydrocinnamate which is commercially available under the tradename IRGANOX™ 1076 from Ciba Specialty Chemicals Inc. and is generally represented by the following structure:

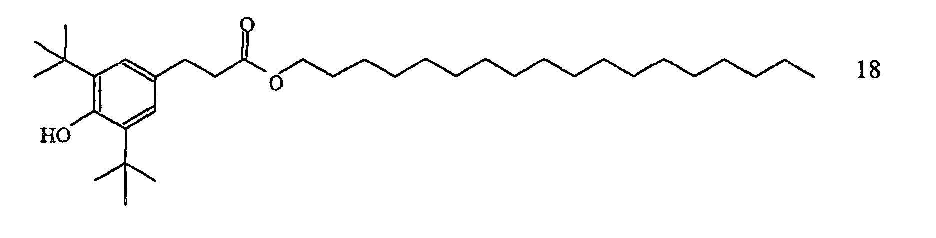

Other preferred hindered phenols include those available under the following tradenames and represented by the indicated chemical formulae:
Monophenols such as IRGANOX 1135: 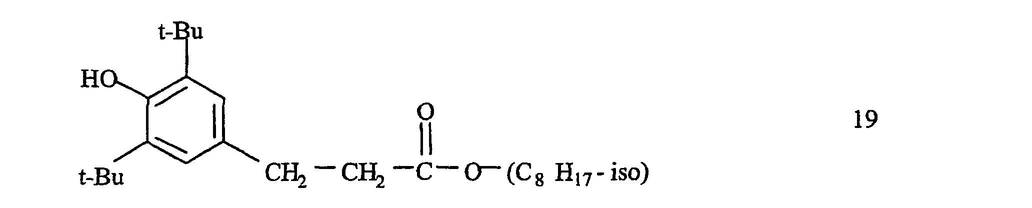
Di-phenols such as IRGANOX 245: 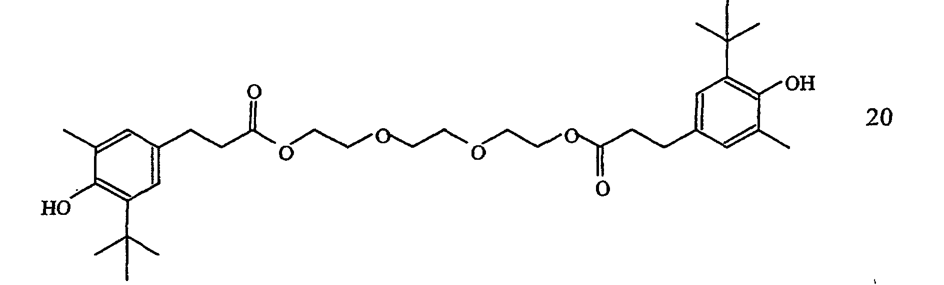
and IRGANOX 259: 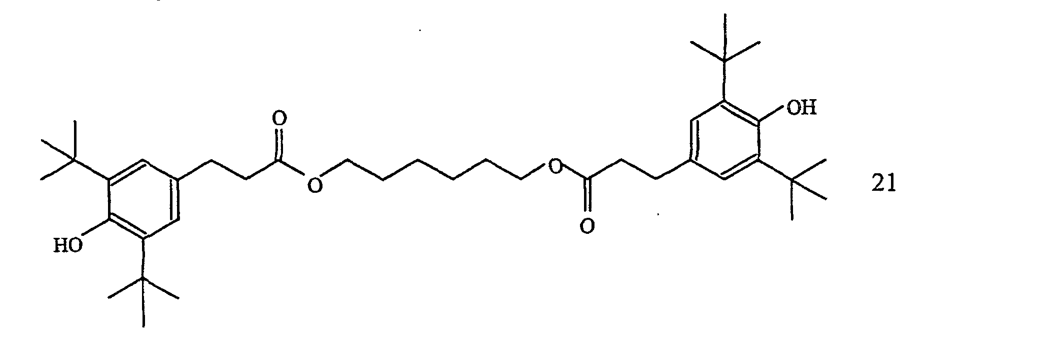
Tri-phenols such as IRGANOX 1330: 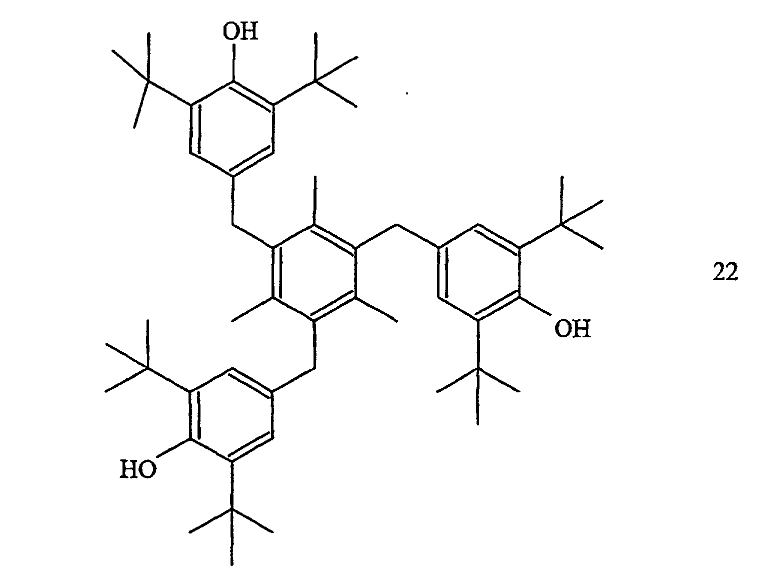
Tetra-phenols such as IRGANOX 1010:

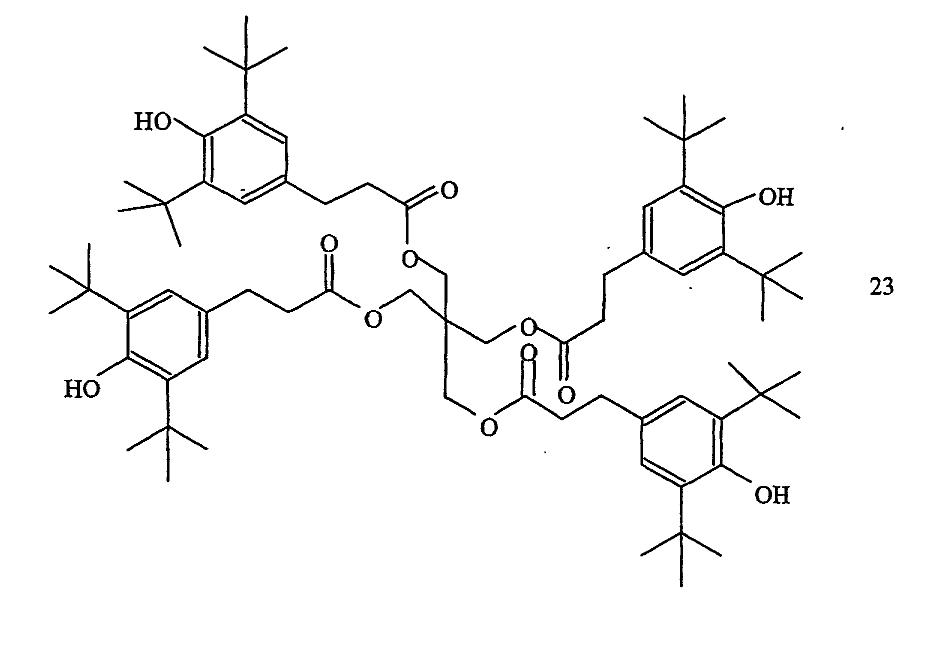

In general, to provide noticeable stabilization benefits, the hindered phenol-type stabilizer should be used at levels of at least 10 ppm based on weight of carbonate polymer into which the compound is being incorporated, preferably at least 15 ppm and most preferably at least 25 ppm. In general, at higher concentration levels there is diminishing benefit and levels of these compounds should not be greater than 2000 ppm, preferably not greater than 1500 ppm, and most preferably not greater than 1000 ppm.

The compositions according to the invention also employ a benzofuran-2-one type (lactone-type) stabilizer. These stabilizers and methods for their preparation are generally known and are taught in GB-2,322,861 and US-A-4,325,863; US-A-5,175,312; US-A-5,252,643; US-A-5,216,052; US-A-5,369,159; US-A-5,488,177; US-A-5,356,966; US-A-5,367,008; US-A-5,428,162; US-A-5,428,177; US-A-5,516,920.

Preferably, a benzofuran-2-one (lactone) type stabilizer according to the following description is used: 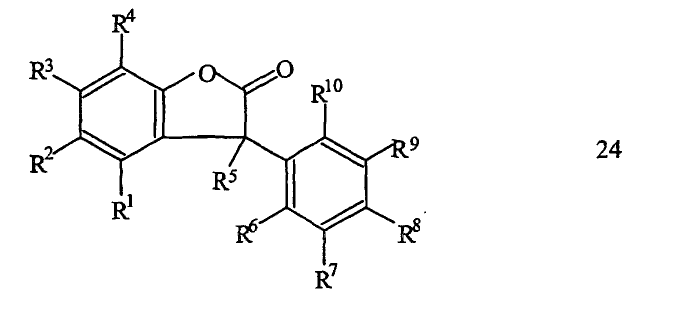 wherein R¹, R³ and R⁵ are hydrogen, R² and R⁴ are independently of each other hydrogen or C₁-C₆ alkyl, R⁶ through R¹⁰ are independently of each other hydrogen, C₁-C₄ alkyl, C₁-C₄ alkoxy or -OCH₂CH₂-O-R¹¹, R¹¹ is C₂-C₄ alkanoyl and provided that at least two of R⁶ through R₁₀ are hydrogen.

The selection of suitable and preferred lactone-type stabilizers is based upon providing their known benefit of free radical scavenging (free radical formation being the first step leading to the autocatalytic degradation of PC) in combination with obtaining their unexpected contributions to the UV stability, reduced color, color stability, reduced plateout and reduced fuming that are provided in the in the final formulations.

A preferred benzofuran-2-one type or lactone-type stabilizer is 2(3H)-benzofuranone, 5,7-bis(1,1-dimethylethyl)-3-(3,4-dimethylphenyl), available under the tradename IRGANOX HP-136 from Ciba Specialty Chemicals Inc. and is generally represented by the following structure:

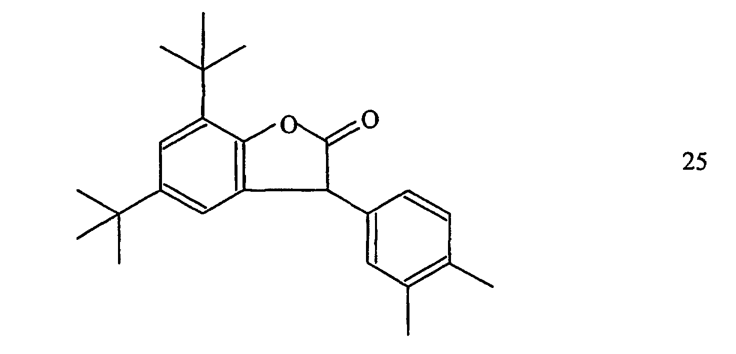

In general, to provide noticeable effects/benefits, the lactone-type stabilizer should be used at levels of at least 5 ppm based on weight of carbonate polymer into which the compound is being incorporated, preferably at least 10 ppm and most preferably at least 15 ppm. In general, at higher concentration levels there is diminishing benefit and levels of these compounds should not be greater than 1000 ppm, preferably not greater than 750 ppm, and most preferably not greater than 500 ppm.

Preformulated mixtures of these three types of stabilizers (phosphite, hindered phenol and lactone) are commercially available from Ciba Specialty Chemicals Inc. as indicated below with the indicated ratios (by weight) of the three components:
IRGANOX HP 2215: ratio 2/4/1 IRGANOX 1010 : IRGAFOS 168 : HP-136
IRGANOX HP 2225 : ratio 3/3/1 IRGANOX 1010 : IRGAFOS 168 : HP-136
IRGANOX HP 2251 : ratio 3/2/1 IRGANOX 1010 : IRGAFOS 168 : HP-136
IRGANOX HP 2921 : ratio 2/3/1 IRGANOX 1076 : IRGAFOS 168 : HP-136
IRGANOX XP 420 : ratio 3/2/1 IRGANOX 1010 : IRGAFOS P-EPQ : HP-136
IRGANOX XP 490 : ratio 3/2/1 IRGANOX 1076 : IRGAFOS P-EPQ : HP-136

The carbonate polymer composition of the present invention may comprise other known stabilizers and amounts commonly used in carbonate polymer compositions of this type, for example antioxidants, light stabilizers, metal deactivators or processing stabilizers which are described, for example, in US-A-5,288,778.

The types and amounts of the stabilizer(s) to be included in the carbonate polymer compositions according to the present invention will vary depending upon the desired balance of combinations of properties and cost. In general, to provide noticeable stabilizing effects and benefits, the stabilizer(s) should be used at levels of at least 5 ppm based on weight of carbonate polymer into which the compound is being incorporated, preferably at least 25 ppm, more preferably at least 50 ppm and most preferably at least 100 ppm. In general, at higher concentration levels there is diminishing benefit and levels of these compounds should not be greater than 5000 ppm, preferably not greater than 3000 ppm, and most preferably not greater than 2000 ppm.

In addition to the UV absorbers and other stabilizers, the carbonate polymer composition according to the present invention can advantageously contain the standard types and amounts of the additive-type components frequently incorporated into carbonate polymers. These components can include ignition resistance additives, fillers (that is, glass fibers, talc, clay, etc.), pigments, dyes, mold release agents, impact modifiers, antistatic additives, and the other additives commonly employed in carbonate polymer compositions.

The resins according to the invention are also advantageously used in blend compositions with other polymer resins such as monovinylidene aromatic polymer optionally containing an impact modifier component (for example, acrylonitrile, butadiene and styrene copolymer (ABS) or acrylonitrile, ethylene-propylene and styrene copolymer (AES)).

Preparation of the carbonate polymer compositions of this invention can be accomplished by any suitable mixing means known in the art, including rollers, kneaders, single screw or multi-screw extruders. The individual components may be dry blended and subsequently melt mixed, either directly in the extruder used to make the finished article (for example, the extruded sheet), or pre-mixing in a separate extruder (for example, a Banbury mixer). Dry blends of the compositions can also be directly injection molded without pre-melt mixing.

Preferably, the carbonate polymer compositions of this invention are thermoplastic. The present invention also involves the use of the carbonate polymer compositions as described above to provide the following wide range of improved processes to prepare molded, shaped or otherwise fabricated articles and improved articles having improved combinations of protection against UV radiation, color and color stability with reduced plate-out behavior during processing. Extrusion, blow molding, thermoforming and injection molding processes for carbonate polymer compositions are well known in the art and commercially practiced for production of a broad range of parts and structures. As is known, extrusion processes for preparing sheet, profiles and like structures involve the steps of melting, forcing the melted polymer through a die, calibration, if needed, and cooling. As is known, blow molding processes for preparing bottles, containers, instrument panels and like structures involve the steps of extrusion or injection molding of an expandable parison, expansion or blowing of the parison to the desired shape and cooling. As is known, thermoforming processes for preparing trays, containers, chocolate molds, and like structures involve the steps of preparing a thermoformable sheet or preform, heating the sheet or preform adjacent to the mold or form of the desired shape, applying a pressure (air pressure or a physical force) or suction to appropriately shape the sheet or preform in the mold or form and cooling. As is known, the injection molding process for lenses, headlamps, lamp covers, and like structures involves the steps of melting, forcing the melted polymer into a mold and cooling.

The improvements in resins, processes and articles and structures according to the present invention are due to the improved UV resistance, improved color and color stability and reduced tendency to plate-out and fuming that provide improved productivity versus a standard resin.

### EXAMPLES

The following experiments show the benefits of carbonate polymer compositions according to the present invention in terms of UV stability, prevention of thermal loss of UV absorbers and improved base color and color stability. These Experiments are given to further illustrate the invention and should not be construed as limiting its scope.

### Polycarbonate

The polycarbonate resin used in all of the experiments is CALIBRE 200-15 polycarbonate resin. This resin is a linear polycarbonate, has a M_{w} of 26400 (as measured by GPC) and a melt flow of 15 g/10 min. (as measured according to ASTM D-1238 under conditions of 300°C / 1.2 kg).

### Additives

The following UV absorbers are used in the experiments:
Hydroxybenzotriazole - Tradename LA-31 from Adeka Argus (LA-31),
   Molecular weight: 662 g/mol, Chemical name: 2,2'-methylene-bis-(6-{2H-benzotriazol-2-yl}-4-{1,1,3,3-tetramethylbutyl}-phenol);
Hydroxyphenyltriazine-Tradename TINUVIN™ 1577 from Ciba Geigy (1577),
   Molecular weight: 429 g/mol, Chemical name: 2-(4,6-diphenyl-1,3,5-triazin-2-yl)-5-hexyloxyphenol; and
Benzoxazinone - Tradename CYASORB™ 3638 from Cytec Industries,
   Molecular weight: 368 g/mol, Chemical name: 2,2'-(1,4-phenylene)bis-[4H-3,1-benzoxazin-4-one].

The following stabilizers are used in the following experiments:
Phosphite type - Tradename IRGAFOS 168 from Ciba Specialty Chemicals Inc. (P 168),
   Molecular weight: 646 g/mol, Chemical name: tris(2,4-di-tert-butylphenyl)phosphite;
Hindered Phenol type - Tradename IRGANOX 1076 from Ciba Specialty Chemicals Inc. (1076), Molecular weight: 530 g/mol, Chemical name: octadecyl 3,5-di-t-butyl-4-hydroxyhydrocinnamate; and
Lactone Type - Tradename IRGANOX HP-136 from Ciba Specialty Chemicals Inc. (HP-136), Molecular weight: 354 g/mol, Chemical name: 2(3H)-benzofuranone, 5,7-bis(1,1-dimethylethyl)-3-(3,4-dimethylphenyl).

### Determination of Initial Base Color and Color Stability

For the purpose of such assessment, the UV absorbers are compounded in the polycarbonate feedstocks at levels between 1500 and 45,500 ppm (0.15 and 4.55 weight percent) on a ZSK-25 twin screw co-rotating Werner and Pfleiderer extruder. The temperature profile used in the extruder is 240°C, 250°C, 260°C, 270°C, 280°C, 290°C, 300°C and 300°C.

Prior to compounding, the polycarbonate is dried at 120°C for 4 hours. The initial base color is measured on the produced granules using a Hunterlab COLORQUEST™ Colorimeter. Granules are placed in a 50mm by 50mm by 50mm quartz cuvette and color is measured in Reflection mode. Color is expressed using the Yellowness Index (YI) D1925 as well as the CIE Lab L*, a* and b* values. Each measurement is repeated at least five times and an average is calculated.

The polycarbonate granules are subsequently injection molded into color chips on an Arburg 800-325 ALLROUNDER™ 370 CMD injection molding machine. The color is measured on the 3.0 mm plaques using the Hunterlab COLORQUEST Colorimeter. For the transparent polycarbonate, the measurement is done using the Transmission mode. As color data, the YI as well as the CIE Lab L*, a* and b* values are recorded. Each measurement is repeated at least five times and an average is calculated.

Injection molding conditions are varied in order to assess the sensitivity of the various resins on initial color and color stability. Particularly, injection molding temperatures at the die of 320°C and 380°C are used, when UV absorber levels are below 1 weight percent. At higher UV absorber levels, injection molding temperatures at the die of 280°C are used. All other molding parameters are kept constant.

An increasing temperature profile from hopper to die is used. Per zone, an increment of 10°C is set. For instance, for a die set temperature of 380°C, a temperature profile 340°C, 350°C, 360°C, 370°C, and 380°C is used. For the sake of simplicity, only the die set temperature is mentioned in the experiments.

The barrel residence time is kept constant by adjusting the machine cycle time at 40 seconds. Taking into account the barrel volumes and part weight, this corresponds to a total barrel residence time of 5 minutes. A five-step holding pressure profile is used in each case. Per step, holding pressure is decreased by 100 bar. A typical holding pressure profile was 1200°C, 1100°C, 1000°C, 900°C, and 800°C bar. During molding, part weight is monitored continuously. When a deviation occurs, this is corrected by adjusting holding pressures. Corrective actions are made in steps of 100 bar over the entire holding pressure profile.

The difference between the color measured at die temperatures of 380°C (YI_{380°C}) and at 320°C (YI_{320°C}) is regarded as a measure for the thermal stability of the polycarbonate materials (ΔYI).

### UV-Stability Testing

Injection molded plaques, as molded in the thermal stability study (condition 320° C), are evaluated in a QUV-B test using 313 nanometer (nm) lamps and a cycle of 4 hours of UV irradiation at 60°C followed by 4 hours of exposure to water condensation at 50°C (in a heated saturated mixture of air and water vapor - ASTM G 53-88).

The difference between the color for a 320°C molded plaque before (YI_{320°C}) and after 700 hours of QUV-B exposure (UV YI_{320°C}) is regarded as a measure for the UV stability of the polycarbonate materials (UV ΔYI).

### Determination of Loss Of UV Additive

Loss of UV absorber from a polymer plaque experiments are performed as follows. For the purpose of such assessment, granules of the carbonate polymer compositions containing the UV additives, prepared as discussed above, are taken and compression molded on an Akila compression molding press at a temperature of 260°C into square plaques of 50 mm by 50 mm and having a thickness of 0.5 mm.

On these plaques, initial UV absorber contents is determined using a HPLC analysis technique. These plaques are placed in an air-circulated oven at various temperatures for various residence times. After the oven exposure, the contents of the UV absorber are measured again and compared to the initial content.

The decrease in UV absorber contents can be regarded as a measure for the degree of fuming and plate-out that can be experienced during material processing such as injection molding or (co)extrusion of sheet structures. Loss of UV absorber is reported as weight percent (wt percent) loss and percentual (%) loss based on the initial weight of the UV absorber in the carbonate polymer composition.

Examples 1 and 2 and Comparative Examples A to G are prepared from polycarbonate 200-15 and various UV absorbers and stabilizer additives using the compounding conditions described hereinabove. Base color (YI), color stability (ΔYI), and UV stability (UV ΔYI) are evaluated according to the techniques described hereinabove. The amount of UV absorbers and performance properties are shown in Table 1, ppm is based on the weight of the carbonate polymer composition.

Examples 4 and 5 and Comparative Examples H to Q are prepared from polycarbonate 200-15 and various UV absorbers and stabilizer additives using the compounding conditions described hereinabove. Base color on pellets (YI) and on plaques molded at 280°C (YI_{280°C}) is evaluated according to the techniques described hereinabove. The amount of UV absorbers and YI and YI_{280°C} performance properties are shown in Table 2, weight percent is based on the weight of the carbonate polymer composition.

Loss of UV absorbers for Examples 4 and 5 and Comparative Examples H to Q is determined over a temperature range from 240°C to 280°C over a period of 80 minutes and the results are presented in Tables 3 to 14.

**Table 1**

| Example Comparative | 1 | 2 | A | B | C | D | E | F | G |
|---|---|---|---|---|---|---|---|---|---|
| UV/Additives, ppm | | | | | | | | | |
| LA-31 | 3000 | | 3000 | 3000 | | | | | |
| 1577 | | 3000 | | | 3000 | 3000 | | | |
| 3638 | | | | | | | 3000 | 3000 | 3000 |
| P 168 | 115 | 115 | | 400 | | 400 | | 400 | 115 |
| 1076 | 55 | 55 | | | | | | | 55 |
| HP-136 | 30 | 30 | | | | | | | 30 |
| | | | | | | | | | |
| Performance | | | | | | | | | |
| Granules | | | | | | | | | |
| YI | 3.60 | 9.90 | 6.11 | 6.55 | 10.33 | 10.69 | 4.27 | 3.39 | 2.11 |
| Plaques | | | | | | | | | |
| YI_{320°C} | 3.07 | 3.76 | 3.70 | 3.52 | 4.35 | 4.10 | 2.50 | 2.33 | 2.57 |
| YI_{380°C} | 3.30 | 3.94 | 4.01 | 3.85 | 4.79 | 4.82 | 4.97 | 6.13 | 4.93 |
| ΔYI | 0.23 | 0.18 | 0.31 | 0.33 | 0.44 | 0.72 | 2.47 | 3.80 | 2.36 |
| After 700 hr QUV-B | | | | | | | | | |
| UV YI_{320°C} | 12.93 | 12.45 | 13.84 | 13.75 | 13.44 | 13.08 | 13.02 | 12.58 | 11.64 |
| UV ΔYI | 9.86 | 8.69 | 10.14 | 10.23 | 9.09 | 8.98 | 10.52 | 10.25 | 9.07 |

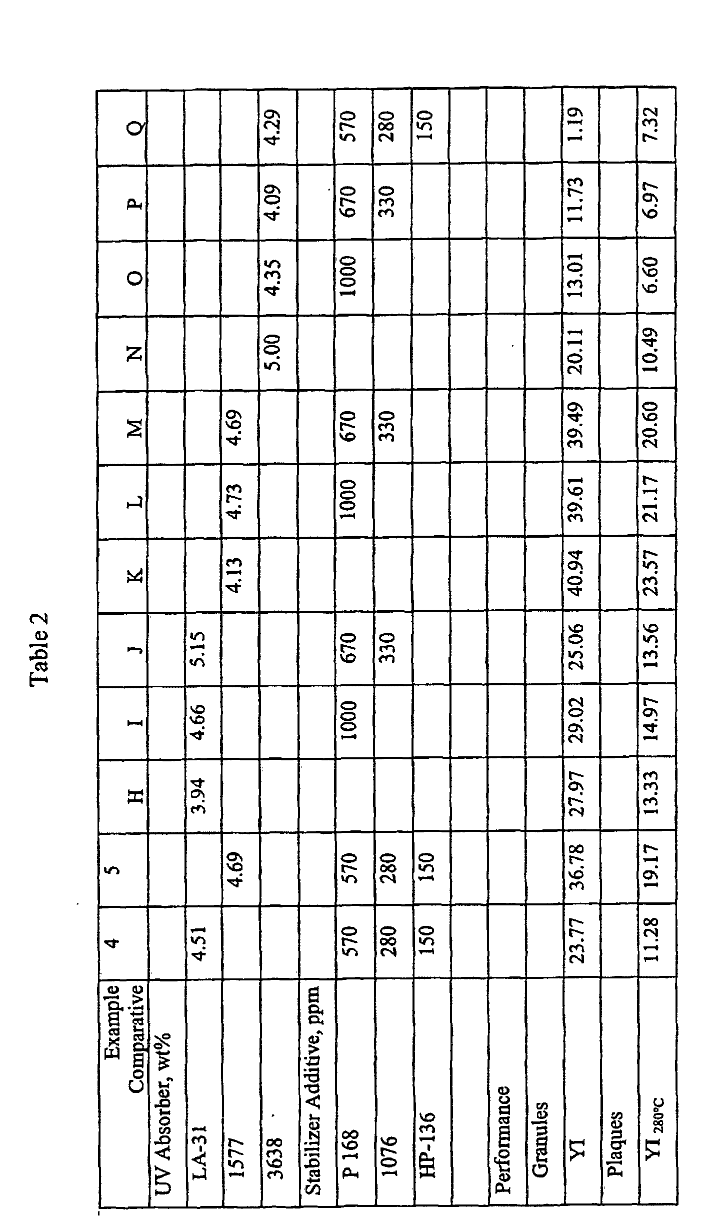

**Table 3**

| Ex. 4: Loss of LA-31 | Time, minutes | | | | |
|---|---|---|---|---|---|
| Temperature, °C | 0 | 20 | 40 | 60 | 80 |
| 240 | 4.51 | 4.48 | 4.46 | 4.34 | 4.21 |
| 260 | 4.51 | 4.45 | 4.26 | 4.17 | 3.92 |
| 280 | 4.51 | 4.26 | 3.85 | 3.67 | 3.61 |
| Loss, wt percent | | | | | |
| 240 | 0 | 0.03 | 0.05 | 0.17 | 0.30 |
| 260 | 0 | 0.06 | 0.25 | 0.34 | 0.59 |
| 280 | 0 | 0.25 | 0.66 | 0.84 | 0.90 |
| Loss, percent | | | | | |
| 240 | 0 | 0.7 | 1.1 | 3.8 | 6.7 |
| 260 | 0 | 1.3 | 5.5 | 7.5 | 13.1 |
| 280 | 0 | 5.5 | 14.6 | 18.6 | 20.0 |

**Table 4**

| Ex. 5: Loss of 1577 | Time, minutes | | | | |
|---|---|---|---|---|---|
| Temperature, °C | 0 | 20 | 40 | 60 | 80 |
| 240 | 4.69 | 4.66 | 4.55 | 4.48 | 4.37 |
| 260 | 4.69 | 4.63 | 4.36 | 4.31 | 4.03 |
| 280 | 4.69 | 4.11 | 3.77 | 3.52 | 3.46 |
| Loss, wt percent | | | | | |
| 240 | 0 | 0.03 | 0.14 | 0.21 | 0.32 |
| 260 | 0 | 0.06 | 0.33 | 0.38 | 0.66 |
| 280 | 0 | 0.58 | 0.92 | 1.17 | 1.23 |
| Loss, percent | | | | | |
| 240 | 0 | 0.6 | 3.0 | 4.5 | 6.8 |
| 260 | 0 | 1.3 | 7.0 | 8.1 | 14.1 |
| 280 | 0 | 12.4 | 19.6 | 24.9 | 26.2 |

**Table 5**

| Com. Ex. H: Loss of LA-31 | Time, minutes | | | | |
|---|---|---|---|---|---|
| Temperature, °C | 0 | 20 | 40 | 60 | 80 |
| 240 | 3.94 | 3.48 | 3.18 | 3.10 | 2.98 |
| 260 | 3.94 | 3.10 | 2.86 | 2.20 | 1.86 |
| 280 | 3.94 | 2.38 | 1.90 | 1.35 | 1.02 |
| Loss, wt percent | | | | | |
| 240 | 0 | 0.46 | 0.76 | 0.84 | 0.96 |
| 260 | 0 | 0.84 | 1.08 | 1.74 | 2.08 |
| 280 | 0 | 1.56 | 2.04 | 2.59 | 2.92 |
| Loss, percent | | | | | |
| 240 | 0 | 11.7 | 19.3 | 21.3 | 24.4 |
| 260 | 0 | 21.3 | 27.4 | 44.2 | 52.8 |
| 280 | 0 | 39.6 | 51.8 | 65.7 | 74.1 |

**Table 6**

| Com. Ex. I: Loss of LA-31 | Time, minutes | | | | |
|---|---|---|---|---|---|
| Temperature, °C | 0 | 20 | 40 | 60 | 80 |
| 240 | 4.66 | 4.53 | 4.51 | 4.46 | 4.28 |
| 260 | 4.66 | 4.53 | 4.06 | 3.97 | 3.92 |
| 280 | 4.66 | 4.12 | 3.85 | 3.73 | 3.09 |
| Loss, wt percent | | | | | |
| 240 | 0 | 0.13 | 0.15 | 0.20 | 0.38 |
| 260 | 0 | 0.13 | 0.58 | 0.69 | 0.74 |
| 280 | 0 | 0.54 | 0.81 | 0.93 | 1.57 |
| Loss, percent | | | | | |
| 240 | 0 | 2.8 | 3.2 | 4.3 | 8.2 |
| 260 | 0 | 2.8 | 12.9 | 14.8 | 15.9 |
| 280 | 0 | 11.6 | 17.4 | 20.0 | 33.7 |

**Table 7**

| Com. Ex. J: Loss of LA-31 | Time, minutes | | | | |
|---|---|---|---|---|---|
| Temperature, °C | 0 | 20 | 40 | 60 | 80 |
| 240 | 5.15 | 4.83 | 4.58 | 4.55 | 4.54 |
| 260 | 5.15 | 4.61 | 4.58 | 4.26 | 4.26 |
| 280 | 5.15 | 4.26 | 3.74 | 3.71 | 2.96 |
| Loss, wt percent | | | | | |
| 240 | 0 | 0.32 | 0.57 | 0.60 | 0.61 |
| 260 | 0 | 0.54 | 0.57 | 0.89 | 0.89 |
| 280 | 0 | 0.89 | 1.41 | 1.44 | 2.19 |
| Loss, percent | | | | | |
| 240 | 0 | 6.2 | 11.1 | 11.7 | 11.8 |
| 260 | 0 | 10.5 | 11.1 | 17.3 | 17.3 |
| 280 | 0 | 17.3 | 27.4 | 28.0 | 42.5 |

**Table 8**

| Com. Ex. K Loss of 1577 | Time, minutes | | | | |
|---|---|---|---|---|---|
| Temperature, °C | 0 | 20 | 40 | 60 | 80 |
| 240 | 4.13 | 3.98 | 3.73 | 3.64 | 3.59 |
| 260 | 4.13 | 3.53 | 3.32 | 3.00 | 2.76 |
| 280 | 4.13 | 3.32 | 2.96 | 2.54 | 2.46 |
| Loss, wt percent | | | | | |
| 240 | 0 | 0.15 | 0.40 | 0.49 | 0.64 |
| 260 | 0 | 0.60 | 0.81 | 1.13 | 1.38 |
| 280 | 0 | 0.81 | 1.17 | 1.59 | 1.67 |
| Loss, percent | | | | | |
| 240 | 0 | 3.6 | 9.7 | 11.9 | 13.1 |
| 260 | 0 | 14.5 | 19.6 | 27.4 | 33.2 |
| 280 | 0 | 19.6 | 28.3 | 38.5 | 40.4 |

**Table 9**

| Com. Ex. L Loss of 1577 | Time, minutes | | | | |
|---|---|---|---|---|---|
| Temperature, °C | 0 | 20 | 40 | 60 | 80 |
| 240 | 4.73 | 4.72 | 4.56 | 4.44 | 4.29 |
| 260 | 4.73 | 4.59 | 3.92 | 3.86 | 3.54 |
| 280 | 4.73 | 4.05 | 3.60 | 3.45 | 3.31 |
| Loss, wt percent | | | | | |
| 240 | 0 | 0.01 | 0.17 | 0.29 | 0.44 |
| 260 | 0 | 0.14 | 0.81 | 0.87 | 1.19 |
| 280 | 0 | 0.68 | 1.13 | 1.28 | 1.42 |
| Loss, percent | | | | | |
| 240 | 0 | 0.2 | 3.6 | 6.1 | 9.3 |
| 260 | 0 | 3.0 | 17.1 | 18.4 | 25.2 |
| 280 | 0 | 14.4 | 23.9 | 27.1 | 30.0 |

**Table 10**

| Com. Ex. M Loss of 1577 | Time, minutes | | | | |
|---|---|---|---|---|---|
| Temperature, °C | 0 | 20 | 40 | 60 | 80 |
| 240 | 4.69 | 4.68 | 4.58 | 4.57 | 4.27 |
| 260 | 4.69 | 4.52 | 4.23 | 4.07 | 3.63 |
| 280 | 4.69 | 4.09 | 3.58 | 3.48 | 3.37 |
| Loss, wt percent | | | | | |
| 240 | 0 | 0.01 | 0.11 | 0.12 | 0.42 |
| 260 | 0 | 0.17 | 0.46 | 0.62 | 1.06 |
| 280 | 0 | 0.60 | 1.11 | 1.21 | 1.32 |
| Loss, percent | | | | | |
| 240 | 0 | 0.2 | 2.3 | 2.6 | 9.0 |
| 260 | 0 | 3.6 | 9.8 | 13.2 | 22.6 |
| 280 | 0 | 12.8 | 23.7 | 25.8 | 28.1 |

**Table 11**

| Com. Ex. N Loss of 3638 | Time, minutes | | | | |
|---|---|---|---|---|---|
| Temperature, °C | 0 | 20 | 40 | 60 | 80 |
| 240 | 4.43 | 4.37 | 4.28 | 4.19 | 4.05 |
| 260 | 4.43 | 4.36 | 4.12 | 3.86 | 3.75 |
| 280 | 4.43 | 3.77 | 3.62 | 3.47 | 2.65 |
| Loss, wt percent | | | | | |
| 240 | 0 | 0.06 | 0.15 | 0.24 | 0.38 |
| 260 | 0 | 0.07 | 0.31 | 0.57 | 0.68 |
| 280 | 0 | 0.67 | 0.81 | 0.96 | 1.78 |
| Loss, percent | | | | | |
| 240 | 0 | 1.4 | 3.4 | 5.4 | 8.6 |
| 260 | 0 | 1.6 | 7.0 | 12.9 | 15.3 |
| 280 | 0 | 14.9 | 18.3 | 21.7 | 40.2 |

**Table 12**

| Com. Ex. O Loss of 3638 | Time, minutes | | | | |
|---|---|---|---|---|---|
| Temperature, °C | 0 | 20 | 40 | 60 | 80 |
| 240 | 4.35 | 4.30 | 4.26 | 4.25 | 4.24 |
| 260 | 4.35 | 4.21 | 4.05 | 3.95 | 3.75 |
| 280 | 4.35 | 3.77 | 3.44 | 3.21 | 3.17 |
| Loss, wt percent | | | | | |
| 240 | 0 | 0.05 | 0.09 | 0.10 | 0.11 |
| 260 | 0 | 0.14 | 0.30 | 0.40 | 0.60 |
| 280 | 0 | 0.58 | 0.91 | 1.14 | 1.18 |
| Loss, percent | | | | | |
| 240 | 0 | 1.1 | 2.1 | 2.3 | 2.5 |
| 260 | 0 | 3.2 | 6.9 | 9.2 | 13.8 |
| 280 | 0 | 13.3 | 20.9 | 26.2 | 27.1 |

**Table 13**

| Com. Ex. P Loss of 3638 | Time, minutes | | | | |
|---|---|---|---|---|---|
| Temperature, °C | 0 | 20 | 40 | 60 | 80 |
| 240 | 4.09 | 3.86 | 3.76 | 3.58 | 3.39 |
| 260 | 4.09 | 3.79 | 3.72 | 3.60 | 3.12 |
| 280 | 4.09 | 3.27 | 3.02 | 2.96 | 2.86 |
| Loss, wt percent | | | | | |
| 240 | 0 | 0.23 | 0.33 | 0.51 | 0.70 |
| 260 | 0 | 0.30 | 0.37 | 0.49 | 0.97 |
| 280 | 0 | 0.82 | 1.07 | 1.13 | 1.23 |
| Loss, percent | | | | | |
| 240 | 0 | 5.6 | 8.1 | 12.5 | 17.1 |
| 260 | 0 | 7.3 | 9.0 | 12.0 | 23.7 |
| 280 | 0 | 20.0 | 26.2 | 27.6 | 30.1 |

**Table 14**

| Com. Ex. Q Loss of 3638 | Time, minutes | | | | |
|---|---|---|---|---|---|
| Temperature, °C | 0 | 20 | 40 | 60 | 80 |
| 240 | 4.29 | 4.26 | 4.19 | 4.17 | 4.13 |
| 260 | 4.29 | 4.20 | 3.82 | 3.42 | 2.88 |
| 280 | 4.29 | 3.50 | 3.11 | 2.97 | 2.75 |
| Loss, wt percent | | | | | |
| 240 | 0 | 0.03 | 0.10 | 0.12 | 0.16 |
| 260 | 0 | 0.09 | 0.47 | 0.87 | 1.41 |
| 280 | 0 | 0.79 | 1.18 | 1.32 | 1.54 |
| Loss, percent | | | | | |
| 240 | 0 | 0.7 | 2.3 | 2.8 | 3.7 |
| 260 | 0 | 2.1 | 11.0 | 20.3 | 32.9 |
| 280 | 0 | 18.4 | 27.5 | 30.8 | 35.9 |

From these data, it can be concluded that the carbonate polymer compositions of the present invention comprising one or more UV absorbing compounds having a molecular weight of at least 400 g/mol selected from a hydroxybenzotriazole derivative, a hydroxyphenyltriazine derivative or mixtures thereof; a phosphite type stabilizer; a hindered phenol type stabilizer; and a lactone type stabilizer yield the best balance of base color, color stability, UV stability and physical retention of UV absorber when compared with controls using a hydroxybenzotriazole derivative, a hydroxyphenyltriazine derivative, or a benzoxazinone compound alone or in combination with a phosphite type stabilizer, or in combination with a phosphite stabilizer and hindered phenol type stabilizer, or a benzoxazinone in combination with a phosphite type stabilizer, a hindered phenol type stabilizer, and a lactone type stabilizer.

It can be seen that carbonate polymer compositions, articles and fabrication techniques according to the invention provide improved combinations of resistance against UV-radiation, color and color stability, and retention of UV absorber in the resin during processing ensuring negligible levels of fuming, plate-out, mold sweat, juicing, etc. It has been found that the present invention provided improved processes for preparing, among other things, extruded sheet structures, blow molded, thermoformed, injection molded, injection blow molded, injection compression molded, film blow molded or foamed parts or structures. It can be seen that the resulting parts or structures according to the present invention are surprisingly improved by use of the described carbonate polymer compositions and the molded, shaped or otherwise fabricated articles will have improved combinations of physical and appearance properties including particularly improved UV resistance, color, color stability, cracking resistance and surface properties, without giving problems of thermal loss of the UV absorbers, resulting in problems of plate-out, fuming, mold sweat and juicing, which all reduce the production rate in commercial applications.

## Claims

1. A carbonate polymer composition comprising
(a) a carbonate polymer,
(b) one or more UV absorbing compounds having a molecular weight of at least 400 g/mol selected from
(i) a hydroxybenzotriazole derivative,
(ii) a hydroxyphenyltriazine derivative
or
(iii) mixtures there of,
(c) a phosphite type stabilizer,
(d) a hindered phenol type stabilizer
and
(e) a lactone type stabilizer.

2. A carbonate polymer composition according to Claim 1 wherein
(b) the UV absorbing compound is present in an amount from 0.05 to 15 weight percent,
(c) the phosphite type stabilizer is present in an amount from 20 to 3000 ppm,
(d) the hindered phenol type stabilizer is in an amount from 10 to 2000 ppm and
(e) the lactone type stabilizer is present in an amount from 5 to 1000 ppm.

3. A carbonate polymer composition according to Claim 2 comprising at least 2 percent by weight of the UV absorbing compound based on weight of carbonate polymer.

4. A carbonate polymer composition according to Claim 1 wherein (b)(i) the 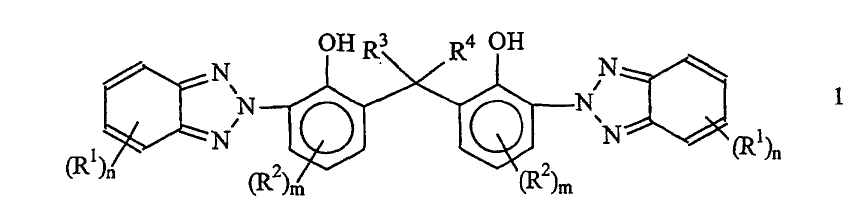 hydroxybenzotriazole derivative is represented by formula 1
wherein R¹ and R², which may be the same or different, represent H, halogen, C₁-C₁₀ alkyl, C₅-C₁₀ cycloalkyl, C₇-C₁₃ aralkyl, C₆-C₁₄ aryl, OR⁵ or COOR⁵, wherein R⁵ represents H or C₁-C₄ alkyl; R³ and R⁴ may also be the same or different and represent H, C₁-C₄ alkyl, C₅ or C₆ cycloalkyl, benzyl or C₆-C₁₄ aryl; m represents 1, 2 or 3 and n represents 1, 2, 3, or 4.

5. A carbonate polymer composition according to Claim 1 wherein (b)(ii) the hydroxyphenyltriazine derivative is represented by formula 3 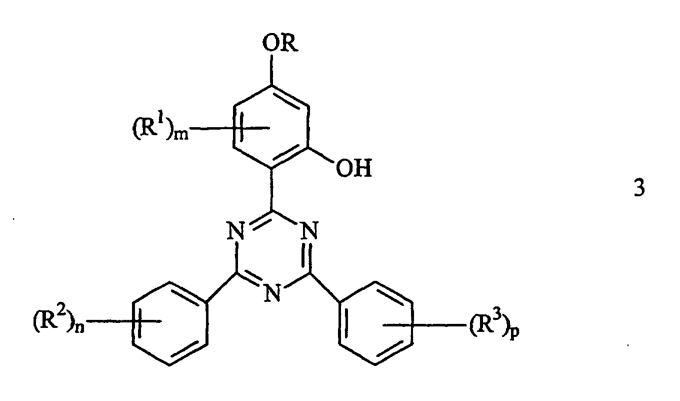 wherein R is hydrogen, C₁ to C₁₈ alkyl, C₂ to C₆ alkyl substituted by halogen or by C₁ to C₁₂ alkoxy, or is benzyl and R¹, R², and R³ which may be the same or different, represent H, halogen, C₁-C₁₀ alkyl, C₅-C₁₀ cycloalkyl, C₇-C₁₃ aralkyl, C₆-C₁₄ aryl, OR⁴ or COOR⁴, wherein R⁴ represents H or C₁-C₄ alkyl; and m represents 1, 2 or 3 and n and p represent 1, 2, 3, 4 or 5.

6. A carbonate polymer composition of Claim 1 wherein (b)(i) is 2,2'-methylene-bis-(6-{2H-benzotriazol-2-yl}-4-{1,1,3,3-tetramethylbutyl}-phenol) and (b)(ii) is 2-(4,6-diphenyl-1,3,5-triazin-2-yl)-5-hexyloxyphenol.

7. A process for preparing a carbonate polymer composition which comprises the step of combining:
(a) a carbonate polymer,
(b) one or more UV absorbing compounds having a molecular weight of at least 400 g/mol selected from
(i) a hydroxybenzotriazole derivative,
(ii) a hydroxyphenyltriazine derivative
or
(iii) mixtures there of,
(c) a phosphite type stabilizer,
(d) a hindered phenol type stabilizer
and
(e) a lactone type stabilizer.

8. A process for producing an extruded or molded article of a carbonate polymer composition comprising the steps of:
(A) preparing a carbonate polymer composition which comprises the step of combining:
(a) a carbonate polymer,
(b) one or more UV absorbing compounds having a molecular weight of at least 400 g/mol selected from
(i) a hydroxybenzotriazole derivative,
(ii) a hydroxyphenyltriazine derivative
or
(iii) mixtures there of,
(c) a phosphite type stabilizer,
(d) a hindered phenol type stabilizer
and
(e) a lactone type stabilizer
and
(B) extruding or molding the carbonate polymer composition into an extruded or molded article.

9. The composition of Claim 1 in the form of a molded or extruded article.

## Patentansprüche

1. Carbonatpolymerzusammensetzung, umfassend:
(a) ein Carbonatpolymeres,
(b) eine oder mehrere UV-absorbierende Verbindungen, die ein Molekulargewicht von wenigstens 400 g/Mol haben, ausgewählt aus:
(i) einem Hydroxybenzotriazolderivat,
(ii) einem Hydroxyphenyltriazinderivat, oder
(iii) Mischungen hiervon,
(c) einen Stabilisator vom Phosphittyp,
(d) einen Stabilisator vom gehinderten Phenoltyp, und
(e) einen Stabilisator vom Lactontyp.

2. Carbonatpolymerzusammensetzung nach Anspruch 1, in welcher:
(b) die UV-absorbierende Verbindung in einer Menge von 0,05 bis 15 Gew.-% vorhanden ist,
(c) der Stabilisator vom Phosphittyp in einer Menge von 20 bis 3000 ppm vorhanden ist,
(d) der Stabilisator vom gehinderten Phenoltyp in einer Menge von 10 bis 2000 ppm vorhanden ist, und
(e) der Stabilisator vom Lactontyp in einer Menge von 5 bis 1000 ppm vorhanden ist.

3. Carbonatpolymerzusammensetzung nach Anspruch 2, umfassend wenigstens 2 Gew.-% der UV-absorbierenden Verbindung, bezogen auf das Gewicht des Carbonatpolymeren.

4. Carbonatpolymerzusammensetzung nach Anspruch 1, in welcher (b)(i), das Hydroxybenzotriazolderivat, durch die Formel 1 wiedergeben wird: 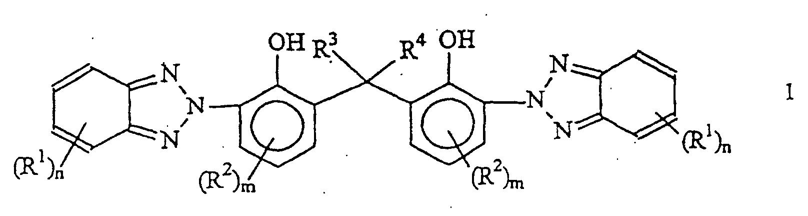 worin R ¹und R², die gleich oder verschieden sein können, darstellen: H, Halogen, C₁-C₁₀-Alkyl, C₅-C₁₀-Cycloalkyl, C₇-C₁₃-Aralkyl, C₆-C₁₄-Aryl, OR⁵ oder COOR⁵, worin R⁵ = H oder C₁-C₄-Alkyl darstellt; R³ und R⁴ ebenfalls gleich oder verschieden sein können und darstellen: H, C₁-C₄-Alkyl, C₅- oder C₆-Cycloalkyl, Benzyl oder C₆-C₁₄-Aryl; m = 1, 2 oder 3 darstellt und n = 1, 2, 3 oder 4 darstellt.

5. Carbonatpolymerzusammensetzung nach Anspruch 1, in welcher (b)(ii), das Hydroxyphenyltriazinderivat, durch die Formel 3 wiedergeben wird: 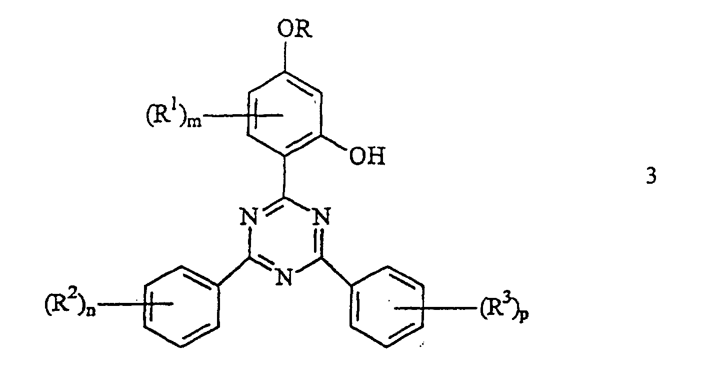 worin R ist: H, C₁- bis C₁₈-Alkyl, C₂- bis C₆-Alkyl, das mit Halogen oder C₁- bis C₁₂-Alkoxy substituiert ist, oder Benzyl ist, und R¹, R² und R³, die gleich oder verschieden sein können, darstellen: H, Halogen, C₁-C₁₀-Alkyl, C₅-C₁₀-Cyclo-alkyl, C₇-C₁₃-Aralkyl, C₆-C₁₄-Aryl, OR⁴ oder COOR⁴, worin R⁴ = H oder C₁-C₄-Alkyl darstellt; und m = 1, 2 oder 3 darstellt und n und p = 1, 2, 3, 4 oder 5 darstellen.

6. Carbonatpolymerzusammensetzung nach Anspruch 1, in welcher (b)(i) 2,2'-Methylen-bis-(6-{2H-benzotriazol-2-yl}-4-{1,1,3,3-tetramethylbutyl}-phenol) ist und (b)(ii) 2-(4,6-Diphenyl-1,3,5-triazin-2-yl)-5-hexyloxyphenol ist.

7. Verfahren zur Herstellung einer Carbonatpolymerzusammensetzung, welches die Stufe des Kombinierens umfaßt von:
(a) einem Carbonatpolymerem,
(b) einer oder mehreren UV-absorbierenden Verbindungen, die ein Molekulargewicht von wenigstens 400 g/Mol haben, ausgewählt aus:
(i) einem Hydroxybenzotriazolderivat,
(ii) einem Hydroxyphenyltriazinderivat, oder
(iii) Mischungen hiervon,
(c) einem Stabilisator vom Phosphittyp,
(d) einem Stabilisator vom gehinderten Phenoltyp, und
(e) einem Stabilisator vom Lactontyp.

8. Verfahren zur Herstellung eines extrudierten oder geformten Gegenstandes aus einer Carbonatpolymerzusammensetzung, umfassend die Stufen von:
(A) Herstellen einer Carbonatpolymerzusammensetzung, welches umfaßt die Stufe des Kombinierens von:
(a) einem Carbonatpolymerem,
(b) einer oder mehreren UV-absorbierenden Verbindungen, die ein Molekulargewicht von wenigstens 400 g/Mol haben, ausgewählt aus:
(i) einem Hydroxybenzotriazolderivat,
(ii) einem Hydroxyphenyltriazinderivat, und
(iii) Mischungen hiervon,
(c) einem Stabilisator vom Phosphittyp,
(d) einem Stabilisator vom gehinderten Phenoltyp, und
(e) einem Stabilisator vom Lactontyp,
und
(B) Extrudieren oder Formen der Carbonatpolymerzusammensetzung in einen extrudierten oder geformten Gegenstand.

9. Zusammensetzung nach Anspruch 1, in Form eines geformten oder extrudierten Gegenstandes.

## Revendications

1. Composition à base de polymère carbonate comprenant :
(a) un polymère carbonate,
(b) un ou plusieurs composés absorbant les UV, ayant une masse moléculaire d'au moins 400 g/mole, choisis parmi :
(i) un dérivé hydroxybenzotriazole,
(ii) un dérivé hydroxyphényltriazine,
ou
(iii) leurs mélanges,
(c) un agent stabilisant de type phosphite,
(d) un agent stabilisant de type phénol encombré
et
(e) un agent stabilisant de type lactone.

2. Composition à base de polymère carbonate selon la revendication 1, dans laquelle :
(b) le composé absorbant les UV est présent en une quantité allant de 0,05 à 15 % en poids,
(c) l'agent stabilisant de type phosphite est présent en une quantité allant de 20 à 3 000 ppm,
(d) l'agent stabilisant de type (hindered) phénol est présent en une proportion allant de 10 à 2 000 ppm,
et
(e) l'agent stabilisant de type lactone est présent en une quantité allant de 5 à 1000 ppm.

3. Composition à base de polymère carbonate selon la revendication 2, telle qu'elle comprend au moins 2 % en poids du composé absorbant les UV, par rapport au poids du polymère carbonate.

4. Composition à base de polymère carbonate selon la revendication 1, dans laquelle (b) (i) 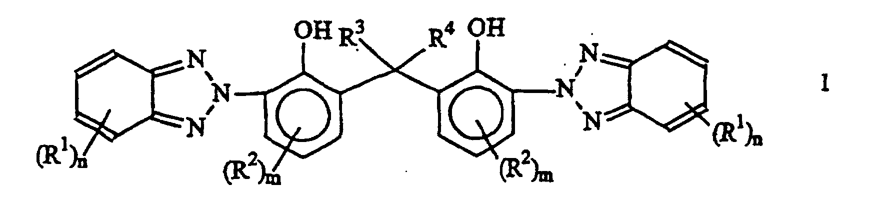 le dérivé d'hydroxybenzotriazole est représenté par la formule 1
dans laquelle R¹ et R², qui peuvent être identiques ou différents, représentent H, un atome d'halogène, un groupe alkyle en C₁-C₁₀, cycloalkyle en C₅-C₁₀, aralkyle en C₇-C₁₃, aryle en C₆-C₁₄, OR⁵ ou COOR⁵, dans laquelle R⁵ représente H ou un groupe alkyle en C₁-C₄, R³ et R⁴ peuvent également être identiques ou différents et représentent H, un groupe alkyle en C₁-C₄, cycloalkyle en C₅ ou C₆, benzyle ou aryle en C₆-C₁₄, m représente 1, 2 ou 3 et n représente 1, 2, 3 ou 4.

5. Composition à base de polymère carbonate selon la revendication 1, dans laquelle (b) (ii) le dérivé d'hydroxyphényltriazine est représenté par la formule 3 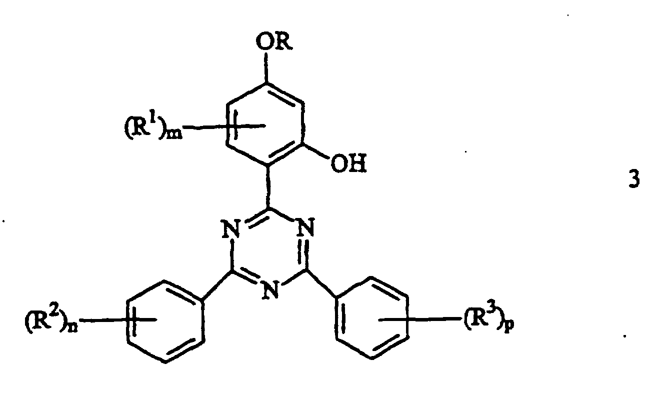 dans laquelle R est un atome d'hydrogène, un groupe alkyle en C, à C₁₈, un groupe alkyle en C₂ à C₆ substitué par un atome d'halogène ou par un groupe alcoxy en C₁ à C₁₂, ou bien R est un groupe benzyle et R¹, R² et R³, qui peuvent être identiques ou différents, représentent H, un groupe halogène, un groupe alkyle en C₁-C₁₀, cycloalkyle en C₅-C₁₀, aralkyle en C₇-C₁₃, aryle en C₆-C₁₄, OR⁴ ou COOR⁴, dans laquelle R⁴ représente H ou un groupe alkyle en C₁-C₄, et m représente 1, 2 ou 3 et n et p représentent 1, 2, 3, 4 ou 5.

6. Composition à base de polymère carbonate selon la revendication 1, dans laquelle (b) (i) est le 2,2'-méthylène-bis-(6-{2H-benzotriazol-2-yl}-4-{1,1,3,3,-tétraméthylbutyl}-phénol) et (b) (ii) est le 2-(4,6-diphényl- 1,3,5-triazin-2-yl)-5-hexyloxyphénol.

7. Procédé de préparation d'une composition à base de polymère carbonate qui comprend l'étape combinant :
(a) un polymère carbonate,
(b) un ou plusieurs composés absorbant les UV ayant une masse moléculaire d'au moins 400 g/mole choisi parmi :
(i) un dérivé hydroxybenzotriazol,
(ii) un dérivé hydroxyphényltriazine
ou
(iii) leurs mélanges,
(c) un agent stabilisant de type phosphite,
(d) un agent stabilisant de type phénol encombré
et
(e) un agent stabilisant de type lactone.

8. Procédé de fabrication d'un article extrudé ou moulé à base d'une composition de polymère carbonate qui comprend les étapes de :
(A)préparer une composition de polymère carbonate comprenant l'étape de combiner :
(a) un polymère carbonate,
(b)un ou plusieurs composés absorbant les UV ayant une masse moléculaire d'au moins 400 g/mole choisis parmi :
(i) un dérivé hydroxybenzotriazol,
(ii) un dérivé hydroxyphényltriazine
ou
(iii) leurs mélanges,
(c) un agent stabilisant de type phosphite,
(d) un agent stabilisant de type phénol encombré,
et
(e) un agent stabilisant de type lactone,
et
(B)extruder ou mouler la composition de polymère carbonate en un article extrudé ou moulé.

9. Composition selon la revendication 1 sous la forme d'un article moulé ou extrudé.
